# EUROPÄISCHE PATENTANMELDUNG

(11) **EP 4 717 073 A1**
(43) Veröffentlichungstag der Anmeldung: **01.04.2026**
(21) Anmeldenummer: 25203853.4
(22) Anmeldetag: 23.09.2025
(51) Int. Cl.: A01D 84/00

(54) **LANDWIRTSCHAFTLICHE ERNTEMASCHINE UND VERFAHREN ZUM BETREIBEN DERSELBEN**

(30) Priorität: 27.09.2024 DE 102024128148
(71) Anmelder: CLAAS Saulgau GmbH, 88348 Bad Saulgau (DE)
(72) Erfinder: Stützle, Simon, 88339 Bad Waldsee (DE)

(57) **Zusammenfassung**

Landwirtschaftliche Erntemaschine (10), mit einen Rahmen oder einem Gestell (12), an welchem ein Fahrwerk (14) und/oder eine Anbauvorrichtung zur Aufnahme an einem Trägerfahrzeug angreift, mit Arbeitseinheiten (17), die sich in einer Arbeitsstellung der Erntemaschine über Abstützeinrichtungen (20) auf einem Untergrund abstützen, mit Bodenentlastungseinrichtungen (21, 24), über die in der Arbeitsstellung der Erntemaschine eine Auflagekraft oder ein Auflagedruck der Arbeitseinheiten (17) auf dem Untergrund einstellbar sind, mit Sensoren (22), die eingerichtet sind, für jede Arbeitseinheit (17) ein Arbeitsgewicht derselben oder ein Gewicht des auf derselben befindlichen Ernteguts oder eine hiervon abhängige Auflagekraft oder einen hiervon abhängigen Auflagedruck der jeweiligen Arbeitseinheit (17) auf dem Untergrund zu messen, und mit einem Steuergerät (23), das eingerichtet ist, abhängig von den Messgrößen der Sensoren (22) die Bodenentlastungseinrichtungen (21, 24) anzusteuern, um die Auflagekräfte oder Auflagedrücke der Arbeitseinheiten (17) zu beeinflussen.

## Beschreibung

Die Erfindung betrifft eine landwirtschaftliche Erntemaschine. Ferner betrifft die Erfindung ein Verfahren zum Betreiben einer landwirtschaftlichen Erntemaschine.

Aus der Praxis sind landwirtschaftliche Erntemaschinen bekannt, die an ein Zugfahrzeug angekoppelt werden können, um mithilfe des Zugfahrzeugs ziehend, also durch das Zugfahrzeug gezogen, fortbewegt zu werden. Bei solchen ziehend durch ein Zugfahrzeug fortbewegten landwirtschaftlichen Erntemaschinen handelt es sich insbesondere um Futtererntemaschinen, wie zum Beispiel Schwader oder Wender. Es ist auch bekannt, landwirtschaftliche Erntemaschinen an der Front eines Zugfahrzeugs oder eines Traktors anzubauen und schiebend fortzubewegen. Bei solchen handelt es sich beispielsweise um Mähwerke oder Front-Bandschwader.

DE 10 2019 118 738 A1 offenbart eine als Merger ausgebildete landwirtschaftliche Erntemaschine mit einem Rahmen oder Gestell, mit einem am Rahmen oder Gestell angreifenden Fahrwerk, mit am Rahmen oder Gestell angreifenden Auslegern sowie mit Arbeitseinheiten. Die Arbeitseinheiten weisen jeweils eine Aufnahmeeinrichtung, nämlich eine Pickup, sowie eine Querfördereinrichtung, nämlich ein Querfördersegment, auf. In der Arbeitsstellung der Erntemaschine stützen sich die Arbeitseinheiten über Tasträder auf dem zu bearbeitenden Untergrund ab.

DE 10 2020 106 804 A1 offenbart eine weitere als Merger ausgebildete, landwirtschaftliche Erntemaschine. Die Erntemaschine kann mithilfe eines Aktuators vorteilhaft zwischen einer Transportstellung und einer Vorgewendestellung überführt werden.

Bei den aus dem Stand der Technik bekannten landwirtschaftlichen Erntemaschinen stützen sich die Arbeitseinheiten über als Tasträder ausgebildete Abstützeinrichtungen auf dem zu bearbeitenden Untergrund ab. Hierbei üben die Arbeitseinheiten eine Auflagekraft bzw. einen Auflagedruck auf den zu bearbeitenden Untergrund aus. Um eine möglichst schonende Bearbeitung des Untergrunds zu ermöglichen, ist eine Bodenentlastung von Bedeutung.

Aufgabe der Erfindung ist es, eine landwirtschaftliche Erntemaschine mit verbesserter Bodenentlastung und ein Verfahren zum Betreiben derselben zu schaffen.

Diese Aufgabe wird durch eine landwirtschaftliche Erntemaschine nach Anspruch 1 und ein Verfahren nach Anspruch 11 gelöst.

Die erfindungsgemäße landwirtschaftliche Erntemaschine weist einen Rahmen oder ein Gestell auf, an welchem ein Fahrwerk und/oder eine Anbauvorrichtung zur Aufnahme an einem Trägerfahrzeug angreift.

Die erfindungsgemäße landwirtschaftliche Erntemaschine weist ferner Arbeitseinheiten auf, die sich in der Arbeitsstellung der Erntemaschine über Abstützeinrichtungen auf einem zu bearbeitenden Untergrund abstützen.

Die erfindungsgemäße landwirtschaftliche Erntemaschine weist ferner Bodenentlastungseinrichtungen auf, über die in der Arbeitsstellung der Erntemaschine eine Auflagekraft oder ein Auflagedruck der Arbeitseinheiten auf dem zu bearbeitenden Untergrund einstellbar sind.

Die erfindungsgemäße landwirtschaftliche Erntemaschine weist ferner Sensoren auf, die eingerichtet sind, für jede Arbeitseinheit ein Arbeitsgewicht derselben oder ein Gewicht des auf derselben befindlichen Ernteguts oder eine hiervon abhängige Auflagekraft oder einen hiervon abhängigen Auflagedruck der jeweiligen Arbeitseinheit auf dem zu bearbeitenden Untergrund zu messen.

Die erfindungsgemäße landwirtschaftliche Erntemaschine weist ferner ein Steuergerät auf, das eingerichtet ist, abhängig von den Messgrößen der Sensoren die Bodenentlastungseinrichtungen anzusteuern, um die Auflagekräfte oder ein Auflagedrücke der Arbeitseinheiten zu beeinflussen.

Bei der erfindungsgemäßen Erntemaschine ist eine besonders vorteilhafte Bodenentlastung möglich. Mithilfe der Sensoren kann für jede Arbeitseinheit individuell das Arbeitsgewicht derselben oder das Gewicht des auf derselben befindlichen Ernteguts oder der hiervon abhängige Auflagedruck oder die hiervon abhängige Auflagekraft der jeweiligen Arbeitseinheit auf dem zu bearbeitenden Untergrund ermittelt werden, um abhängig von den Messgrößen der Sensoren die Bodenentlastungseinrichtungen anzusteuern. Hiermit können für die vorteilhafte Bodenentlastung die Auflagekräfte oder die Auflagedrücke der Arbeitseinheiten auf dem zu bearbeitenden Untergrund vorteilhaft angepasst werden.

Vorzugsweise ist das Steuergerät eingerichtet, abhängig von den Messgrößen der Sensoren Bodenentlastungseinrichtungen derart anzusteuern, dass sich die Auflagekräfte oder Auflagedrücke der Arbeitseinheiten einem vorgegebenen Wert annähern.

Die erfindungsgemäße landwirtschaftliche Erntemaschine weist vorzugsweise ferner Ausleger auf, wobei zu beiden Seiten des Rahmens oder Gestells jeweils mindestens ein Ausleger am Rahmen oder Gestell derart angreift, dass zur Überführung der Erntemaschine zwischen einer Arbeitsstellung und einer Transportstellung der jeweilige Ausleger relativ zum Rahmen oder Gestell verlagerbar ist.

Vorzugsweise ist jede Arbeitseinheit um eine Schwenkachse relativ zum jeweiligen Ausleger schwenkbar, wobei jeder Arbeitseinheit mindestens zwei Sensoren zugeordnet sind, nämlich beispielsweise zumindest ein Sensor auf einer ersten Seite der Schwenkachse und ein zweiter Sensor auf einer zweiten Seite der Schwenkachse der jeweiligen Arbeitseinheit, wobei das Steuergerät eingerichtet ist, abhängig von den Messgrößen der Sensoren der jeweiligen Arbeitseinheit für jede Arbeitseinheit ein bezogen auf die Schwenkachse der jeweiligen Arbeitseinheit wirkendes Differenzmoment zu ermitteln, und wobei das Steuergerät eingerichtet ist, abhängig vom Differenzmoment die Bodenentlastungseinrichtung der jeweiligen Arbeitseinheit derart anzusteuern, dass das jeweilige Differenzmoment reduziert und/oder auf einen vorbestimmten Wert eingestellt wird. Hiermit ist es möglich, über die Breite der jeweiligen Arbeitseinheit für dieselbe einen gleichmäßigen Auflagedruck bzw. eine gleichmäßige Auflagekraft auf dem zu bearbeitenden Untergrund zu gewährleisten.

Es wäre in diesem Zusammenhang auch ein Sensor denkbar, der das Gesamtgewicht misst und ein weiterer Sensor, der die Verteilung bzw. die Belastung einer Seite misst.

Vorzugsweise ist die landwirtschaftliche Erntemaschine eine Futtererntemaschine, insbesondere ein Merger oder Pickup-Band-Schwader, wobei an jedem der Ausleger als Arbeitseinheit eine Pickup und ein Querfördersegment angreift. Die Erfindung kommt vorzugsweise bei einem Merger zum Einsatz.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine landwirtschaftliche Erntemaschine zusammen mit einem Zugfahrzeug in Seitenansicht;
- Fig. 2: einen Ausschnitt aus Fig. 1;
- Fig. 3: eine Alternative zum Ausschnitt der Fig. 1;
- Fig. 4: eine Draufsicht auf die erfindungsgemäße landwirtschaftliche Erntemaschine;
- Fig. 5: ein Detail der Fig. 4.

Die Erfindung betrifft eine landwirtschaftliche Erntemaschine 10.

Bei der landwirtschaftlichen Erntemaschine 10 handelt es sich insbesondere um eine Futtererntemaschine, die zur ziehenden Fortbewegung durch ein Zugfahrzeug an das Zugfahrzeug 11 angekoppelt werden kann.

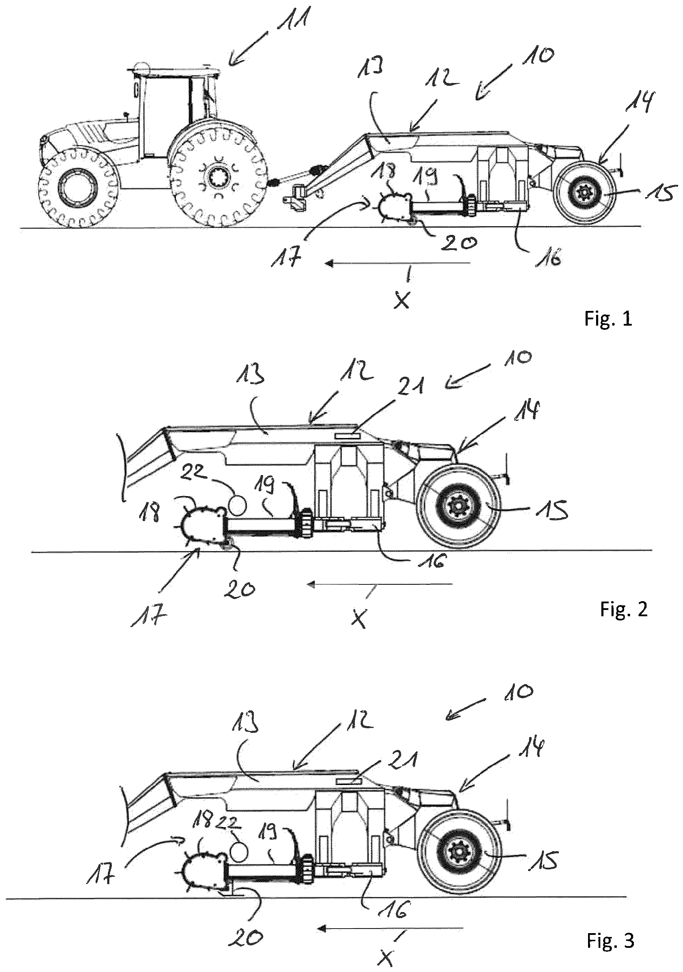

Fig. 1 zeigt eine Seitenansicht eines Zuggespanns aus einer landwirtschaftlichen Erntemaschine 10 und einem Zugfahrzeug 11. Bei der landwirtschaftlichen Erntemaschine 10 handelt es sich vorzugsweise um eine Futtererntemaschine, insbesondere um einen Merger, der auch als Pickup-Band-Schwader bezeichnet wird.

Die landwirtschaftliche Erntemaschine 10 weist ein Gestell bzw. einen Rahmen 12 auf, wobei das Gestell bzw. der Rahmen 12 einen Längsträger 13 aufweist, der sich in Längsrichtung X der landwirtschaftlichen Erntemaschine 10 erstreckt.

An dem Rahmen oder Gestell 12 der landwirtschaftlichen Erntemaschine 10 greift ein Fahrwerk 14 mit Rädern 15 sowie eine Anbauvorrichtung zur Aufnahme bzw. Ankopplung an ein Träger- bzw. Zugfahrzeug an. Beim ziehenden Fortbewegen der landwirtschaftlichen Erntemaschine 10 mithilfe des Zugfahrzeugs 11 stützen sich die Räder 15 des Fahrwerks 14 auf dem zu bearbeitenden Untergrund ab.

Die landwirtschaftliche Erntemaschine 10 könnte alternativ ohne ein eigenes Fahrwerk ausgeführt sein und mit einer Anbauvorrichtung an einem Trägerfahrzeug aufgenommen werden. Darüber hinaus ist es auch möglich die Erntemaschine 10 als selbstfahrende Erntemaschine auszuführen.

Die landwirtschaftliche Erntemaschine 10 verfügt weiterhin über Ausleger 16.

Zu beiden Seiten des Rahmens oder Gestells 12, nämlich zu beiden Seiten des Längsträgers 13, greift jeweils ein Ausleger 16 am Rahmen oder Gestell 12 an, nämlich derart, dass zur Überführung der Erntemaschine 10 zwischen einer Arbeitsstellung und einer Transportstellung der jeweilige Ausleger 16 relativ zum Rahmen oder Gestell 12 verlagerbar ist.

In Fig. 1 bis 4 ist die landwirtschaftliche Erntemaschine 10 jeweils in ihrer Arbeitsstellung gezeigt.

Die landwirtschaftliche Erntemaschine 10 verfügt weiterhin über Arbeitseinheiten 17.

An jedem Ausleger 16 greift jeweils mindestens eine Arbeitseinheit 17 an, die zusammen mit dem jeweiligen Ausleger 16 verlagerbar ist, nämlich bei der Überführung der Erntemaschine 10 zwischen der Arbeitsstellung und der Transportstellung. Im gezeigten Ausführungsbeispiel, in welchem die landwirtschaftliche Erntemaschine 10 als Merger ausgebildet ist, weist jede Arbeitseinheit 17 eine Pickup 18 und Querfördersegment 19 auf, wobei die Querfördersegmente 19 der Arbeitseinheiten 17 einen sich in Querrichtung Y der landwirtschaftlichen Erntemaschine 10 erstreckenden Bandförderer bzw. Querförderer ausbilden.

In der Arbeitsstellung der landwirtschaftlichen Erntemaschine 10 stützen sich die Arbeitseinheiten 17 über Abstützeinrichtungen 20 auf dem zu bearbeitenden Untergrund ab, wobei in Fig. 1 und 2 als Abstützeinrichtungen 20 Tastrollen und in Fig. 3 Kufen gezeigt sind.

Die erfindungsgemäße landwirtschaftliche Erntemaschine 10 verfügt über Bodenentlastungseinrichtungen 21. Über die Bodenentlastungseinrichtungen 21 kann in der Arbeitsstellung der Erntemaschine 10 eine Auflagekraft oder ein Auflagedruck der Arbeitseinheiten 17 auf dem zu bearbeitenden Untergrund eingestellt werden.

Die in Fig. 2, 3 gezeigten Bodenentlastungseinrichtungen 21 wirken dabei auf den jeweiligen Ausleger 16, um über den jeweiligen Ausleger 16 die jeweilige Arbeitseinheit 17 entweder stärker vom Boden abzuheben oder stärker in Richtung auf den Boden zu bewegen und so letztendlich den Auflagedruck oder die Auflagekraft der jeweiligen Arbeitseinheit 17, die am jeweiligen Ausleger 16 angreift, einzustellen.

Die Bodenentlastungseinrichtungen 21 können alternativ auch direkt auf die Arbeitseinheiten wirken.

Die erfindungsgemäße landwirtschaftliche Erntemaschine 10 weist weiterhin Sensoren 22 auf. Die Sensoren 22 sind eingerichtet, für jede Arbeitseinheit 17 ein Arbeitsgewicht derselben oder ein Gewicht des auf derselben befindlichen Ernteguts oder eine hiervon abhängige Auflagekraft oder einen hiervon abhängigen Auflagedruck der jeweiligen Arbeitseinheit 17 auf dem zu bearbeitenden Untergrund zu messen.

Unter dem Arbeitsgewicht einer Arbeitseinheit 17 ist das Gewicht derselben als solches sowie das Gewicht des auf derselben befindlichen Ernteguts zu verstehen.

Die Sensoren 22 können den Abstützeinrichtungen 20 der Arbeitseinheiten 17 zugeordnet sein, wobei dann mithilfe der Sensoren 22 insbesondere das Arbeitsgewicht der Arbeitseinheiten 17 erfasst werden kann. Auch ist es möglich, dass die Sensoren 22 den Querfördersegmenten 19 der Arbeitseinheiten 17 zugeordnet sind, um dann insbesondere das Gewicht des auf den Querfördersegmenten 19 der Arbeitseinheiten 17 befindlichen Ernteguts zu messen.

Die Sensoren 22 können dabei zum Beispiel als Dehnmessstreifen, Drucksensoren oder Messbolzen ausgeführt sein. Auch kann es sich bei einem, einem Querfördersegment 19 zugeordneten, Sensor um eine Kamera handeln, um abhängig von dem von der Kamera erfassten Bild das Gewicht auf dem Querfördersegment 19 der landwirtschaftlichen Erntemaschine befindlichen Ernteguts zu ermitteln.

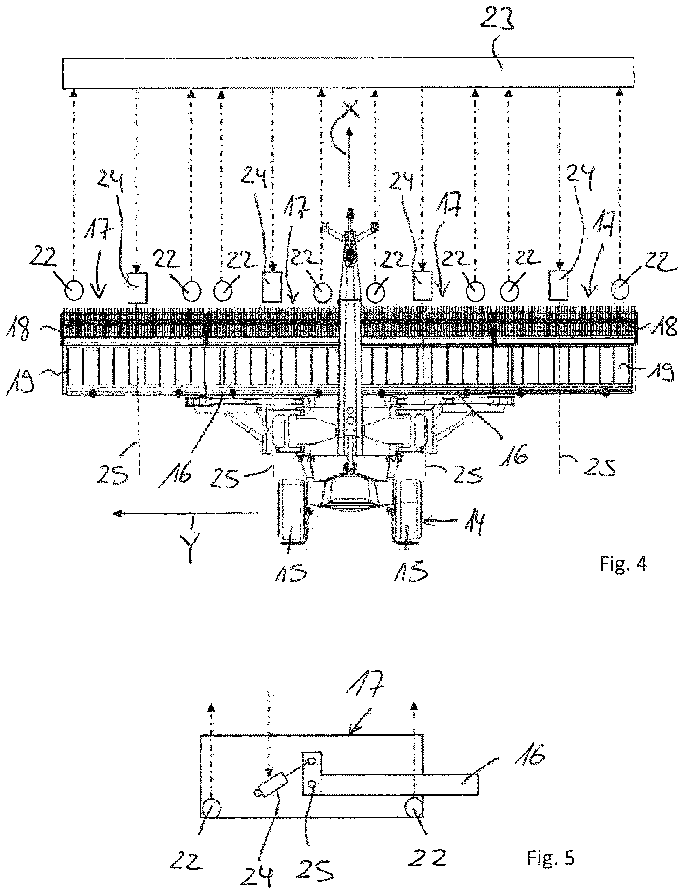

Die landwirtschaftliche Erntemaschine 10 verfügt weiterhin über ein in Fig. 1 bis 3 nicht gezeigtes Steuergerät 23, welches jedoch stark schematisiert in Fig. 4 gezeigt ist.

Das Steuergerät 23 ist eingerichtet, abhängig von den Messgrößen der Sensoren 22 die Bodenentlastungseinrichtungen 21 anzusteuern, um die Auflagekräfte oder Auflagedrücke der Arbeitseinheiten 17 auf dem zu bearbeitenden Untergrund zu beeinflussen.

So kann das Steuergerät 23 eingerichtet sein, abhängig von den Messgrößen der Sensoren 22 die Bodenentlastungseinrichtungen 21 derart anzusteuern, dass sich die Auflagekräfte oder Auflagedrücke der Arbeitseinheiten 17 an einen vorgegebenen Wert annähern.

Ferner kann das Steuergerät 23 eingerichtet sein, abhängig von den Messgrößen der Sensoren 22 Bodenentlastungseinrichtungen 24 (siehe Fig. 4) der Arbeitseinheiten 17 derart anzusteuern, dass sich die Auflagekräfte oder Auflagedrücke aller Arbeitseinheiten 17 einander annähern.

Während also in Fig. 2 und 3 die gezeigte Bodenentlastungseinrichtung 21 auf den jeweiligen Ausleger 16 und damit auf alle am jeweiligen Ausleger 16 angreifenden Arbeitseinheiten 17 gleichmäßig einwirkt, ist in Fig. 4 jeder Arbeitseinheit 17 eine individuelle Bodenentlastungseinrichtung 24 zugeordnet, die die Auflagekraft bzw. den Auflagedruck für die jeweilige Arbeitseinheit 17 individuell beeinflussen kann.

Vorzugsweise ist jede Arbeitseinheit 17 um eine Schwenkachse 25 individuell relativ zum jeweiligen Ausleger 16 schwenkbar. Jeder Arbeitseinheit 17 sind dabei in Fig. 4 zwei Sensoren 22 zugeordnet, nämlich zumindest ein Sensor 22 auf einer ersten Seite der Schwenkachse 25 und ein zweiter Sensor 22 auf einer zweiten Seite der Schwenkachse 25 der jeweiligen Arbeitseinheit 17. Diese Sensoren 22 übermitteln ihre Messgrößen an das Steuergerät 23, welches eingerichtet ist, abhängig von den Messgrößen der Sensoren 22 der jeweiligen Arbeitseinheit 17 für jede Arbeitseinheit 17 ein bezogen auf die Schwenkachse 25 der jeweiligen Arbeitseinheit 17 wirkendes Differenzmoment zu ermitteln.

Das Steuergerät 23 ist dann ferner eingerichtet, abhängig vom ermittelten Differenzmoment die Bodenentlastungseinrichtung 24 der jeweiligen Arbeitseinheit 17 derart anzusteuern, dass das jeweilige Differenzmoment reduziert wird, insbesondere derart, dass ein Betrag desselben kleiner als ein vorgegebener Grenzwert ist oder vorzugsweise Null beträgt.

In Fig. 4 kann nicht nur gewährleistet werden, dass sich die Auflagekräfte oder Auflagedrücke aller Arbeitseinheiten 17 einander annähern, vielmehr kann auch über die Breite der jeweiligen Arbeitseinheit 17 eine gleichmäßige Auflagekraft bzw. ein gleichmäßiger Auflagedruck der jeweiligen Arbeitseinheit 17 auf dem Untergrund gewährleistet werden.

Fig. 5 zeigt einen Ausschnitt aus der landwirtschaftlichen Erntemaschine 10 der Fig. 4 im Bereich einer Arbeitseinheit 17, wobei Fig. 5 die Schwenkachse 25 zeigt, um welche die jeweilige Arbeitseinheit 17 relativ zum Ausleger 16 schwenkbar ist, ebenso die Bodenentlastungseinrichtung 24, die einerseits gelenkig an der Arbeitseinheit 17 und andererseits am Ausleger 16 angreift, um auf die jeweilige Arbeitseinheit 17 ein Moment aufzubringen, und zwar derart, dass das Differenzmoment an der jeweiligen Arbeitseinheit 19 vorzugsweise Null beträgt.

Das Steuergerät 23 kann auf die Bodenentlastungseinrichtungen 21, 24 entweder über eine Steuerung oder Regelung einwirken. Dann, wenn das Steuergerät 23 auf die Bodenentlastungseinrichtungen 21, 24 im Sinne einer Regelung einwirkt, werden Messwerte der Sensoren 22 fortlaufend ausgewertet und abhängig hiervon im Sinne einer Regelung die Bodenentlastungseinrichtungen 21, 24 fortlaufend nachgeregelt, um zum Beispiel zu gewährleisten, dass eine Ist-Auflagekraft oder ein Ist-Auflagedruck an einer jeweiligen Arbeitseinheit 17 einem vorgegebenen Soll-Auflagedruck bzw. einer vorgegebenen Soll-Auflagekraft entspricht.

Mit der Erfindung wird also vorgeschlagen, mithilfe von Sensoren 22 das Arbeitsgewicht von Arbeitseinheiten 17 oder das Gewicht des auf den Arbeitseinheiten 17 befindlichen Ernteguts oder die Auflagekraft bzw. den Auflagedruck der jeweiligen Arbeitseinheit 17 auf dem zu bearbeitenden Untergrund zu messen und abhängig hiervon Bodenentlastungseinrichtungen 21, 24 anzusteuern.

Mit der Erfindung kann eine Bodenentlastungsfunktion bereitgestellt werden, die eine besonders schonende Bearbeitung des Untergrunds ermöglicht, und zwar gleichmäßig über die gesamte Arbeitsbreite der Erntemaschine 10 sowie über die jeweilige Breite der jeweiligen Arbeitseinheit 17. Dies ist insbesondere bei einem Merger oder Pickup-Band-Schwader von besonderem Vorteil, bei welchem in Förderrichtung der von den Querfördersegmenten 19 gebildeten Querfördereinrichtung das Arbeitsgewicht der Arbeitseinheiten 17 stetig bzw. fortlaufend zunimmt.

Die Erfindung betrifft weiterhin ein Verfahren zum Betreiben einer landwirtschaftlichen Erntemaschine 10, wobei das Arbeitsgewicht von Arbeitseinheiten 17 oder das Gewicht von auf den Arbeitseinheiten 17 befindlichem Erntegut oder abhängig hiervon eine Auflagekraft oder ein Auflagedruck der jeweiligen Arbeitseinheit 17 auf dem zu bearbeitenden Untergrund gemessen wird, um abhängig von den Messgrößen die Bodenentlastungseinrichtungen 21, 24 so anzusteuern, dass Auflagekräfte und Auflagedrücke der Arbeitseinheiten beeinflusst werden.

### Bezugszeichenliste

- 10: Erntemaschine
- 11: Zugfahrzeug
- 12: Gestell/Rahmen
- 13: Längsträger
- 14: Fahrwerk
- 15: Rad
- 16: Ausleger
- 17: Arbeitseinheit
- 18: Pickup
- 19: Querfördersegment
- 20: Abstützeinrichtung
- 21: Bodenentlastungseinrichtung
- 22: Sensor
- 23: Steuergerät
- 24: Bodenentlastungseinrichtung
- 25: Schwenkachse

## Patentansprüche

1. Landwirtschaftliche Erntemaschine (10),
mit einen Rahmen oder einem Gestell (12), an welchem ein Fahrwerk (14) und/oder eine Anbauvorrichtung zur Aufnahme an einem Trägerfahrzeug angreift,
mit Arbeitseinheiten (17), die sich in einer Arbeitsstellung der Erntemaschine über Abstützeinrichtungen (20) auf einem zu bearbeitenden Untergrund abstützen,
mit Bodenentlastungseinrichtungen (21, 24), über die in der Arbeitsstellung der Erntemaschine eine Auflagekraft oder ein Auflagedruck der Arbeitseinheiten (17) auf dem zu bearbeitenden Untergrund einstellbar sind,
mit Sensoren (22), die eingerichtet sind, für jede Arbeitseinheit (17) ein Arbeitsgewicht derselben oder ein Gewicht des auf derselben befindlichen Ernteguts oder eine hiervon abhängige Auflagekraft oder einen hiervon abhängigen Auflagedruck der jeweiligen Arbeitseinheit (17) auf dem zu bearbeitenden Untergrund zu messen,
mit einem Steuergerät (23), das eingerichtet ist, abhängig von den Messgrößen der Sensoren (22) die Bodenentlastungseinrichtungen (21, 24) anzusteuern, um die Auflagekräfte oder Auflagedrücke der Arbeitseinheiten (17) zu beeinflussen.

2. Landwirtschaftliche Erntemaschine (10) nach Anspruch 1, **dadurch gekennzeichnet, dass** die Sensoren (22) den Abstützeinrichtungen (20) der Arbeitseinheiten (17) zugeordnet sind.

3. Landwirtschaftliche Erntemaschine (10) nach Anspruch 1, **dadurch gekennzeichnet, dass** die Sensoren (22) Querfördersegmenten (19) der Arbeitseinheiten (17) zugeordnet sind.

4. Landwirtschaftliche Erntemaschine (10) nach einem der Ansprüche 1 bis 3, **dadurch gekennzeichnet, dass** das Steuergerät (23) eingerichtet ist, abhängig von den Messgrößen der Sensoren (22) Bodenentlastungseinrichtungen (21) derart anzusteuern, dass sich die Auflagekräfte oder Auflagedrücke der Arbeitseinheiten (17) einem vorgegebenen Wert annähern.

5. Landwirtschaftliche Erntemaschine (10) nach einem der Ansprüche 1 bis 4, **dadurch gekennzeichnet, dass**
jede Arbeitseinheit (17) um eine Schwenkachse (25) relativ zu einem jeweiligen Ausleger (16) schwenkbar ist,
jeder Arbeitseinheit (17) mindestens zwei Sensoren (22) zugeordnet sind, nämlich zumindest ein Sensor (22) auf einer ersten Seite der Schwenkachse (25) der jeweiligen Arbeitseinheit (17) und ein zweiter Sensor (22) auf einer zweiten Seite der Schwenkachse (25) der jeweiligen Arbeitseinheit (17),
das Steuergerät (23) eingerichtet ist, abhängig von den Messgrößen der Sensoren (22) der jeweiligen Arbeitseinheit (17) für jede Arbeitseinheit (17) ein bezogen auf die Schwenkachse (25) der jeweiligen Arbeitseinheit (17) wirkendes Differenzmoment zu ermitteln,
das Steuergerät (23) eingerichtet ist, abhängig vom Differenzmoment die Bodenentlastungseinrichtung (24) der jeweiligen Arbeitseinheit (17) derart anzusteuern, dass das jeweilige Differenzmoment reduziert wird.

6. Landwirtschaftliche Erntemaschine (10) nach Anspruch 5, **dadurch gekennzeichnet, dass** das Steuergerät (23) eingerichtet ist, abhängig vom Differenzmoment die Bodenentlastungseinrichtung (24) der jeweiligen Arbeitseinheit (17) derart anzusteuern, dass das jeweilige Differenzmoment auf einen Betrag reduziert wird, der kleiner als ein vorgegebener Grenzwert ist.

7. Landwirtschaftliche Erntemaschine (10) nach Anspruch 5 oder 6, **dadurch gekennzeichnet, dass** das Steuergerät (23) eingerichtet ist, abhängig vom Differenzmoment die Bodenentlastungseinrichtung (24) der jeweiligen Arbeitseinheit (17) derart anzusteuern, dass das jeweilige Differenzmoment auf null reduziert wird.

8. Landwirtschaftliche Erntemaschine (10) nach einem der Ansprüche 1 bis 7, **dadurch gekennzeichnet, dass** dieselbe eine Futtererntemaschine ist.

9. Landwirtschaftliche Erntemaschine (10) nach Anspruch 8, **dadurch gekennzeichnet, dass** die Futtererntemaschine ein Merger oder ein Pickup-Band-Schwader ist.

10. Verfahren zum Betreiben einer landwirtschaftlichen Erntemaschine (10) nach einem der Ansprüche 1 bis 9, mit folgende Schritten:
für jede Arbeitseinheit (17) Messen des Arbeitsgewichts derselben oder des Gewichts des auf derselben befindlichen Ernteguts oder der hiervon abhängigen Auflagekraft oder des hiervon abhängigen Auflagedrucks der jeweiligen Arbeitseinheit (17) auf dem zu bearbeitenden Untergrund,
abhängig von den Messgrößen Ansteuern der Bodenentlastungseinrichtungen (21, 24), um die Auflagekräfte oder Auflagedrücke der Arbeitseinheiten (17) zu beeinflussen.
